# EUROPEAN PATENT APPLICATION

(11) **EP 4 044 516 A1**
(43) Date of publication of application: **17.08.2022**
(21) Application number: 20894862.0
(22) Date of filing: 24.11.2020
(51) Int. Cl.: H04L 12/24, H04L 29/14

(54) **FAULT LOCATING METHOD, APPARATUS AND DEVICE, AND STORAGE MEDIUM**

(30) Priority: 29.11.2019 CN 201911199526
(71) Applicant: ZTE Corporation, Shenzhen, Guangdong 518057 (CN)
(72) Inventor: HAN, Junhua, Shenzhen, Guangdong 518057 (CN); GUO, Huifeng, Shenzhen, Guangdong 518057 (CN); LI, Haibin, Shenzhen, Guangdong 518057 (CN); PENG, Xin, Shenzhen, Guangdong 518057 (CN); BO, Kaitao, Shenzhen, Guangdong 518057 (CN)
(74) Representative: Swindell & Pearson Limited
(86) International application number: PCT/CN2020/131169
(87) International publication number: WO 2021/104269

(57) **Abstract**

Disclosed are a fault locating method, apparatus and device, and a storage medium. The method comprises: acquiring a first relationship diagram corresponding to a service model, wherein the service model is a model of a current network service, and the first relationship diagram includes a hierarchical relationship between nodes; on the basis of configuration information of the current network service and the first relationship diagram, instantiating nodes in the service model to generate a second relationship diagram of the current network service, and performing fault location on the current network service on the basis of the second relationship diagram.

## Description

### CROSS-REFERENCE TO RELATED APPLICATION

The present application is filed on the basis of the Chinese Patent Application No. 201911199526.6 filed on November 29, 2019, and claims priority of the Chinese Patent Application, the entire contents of which are incorporated herein by reference.

### TECHNICAL FIELD

The embodiments of the present application relate to the network fault location technology, and in particular to a fault location method, apparatus, a device and a storage medium.

### BACKGROUND

As the scale of the bearer network is increasing and the structure of the network becomes more and more complex, when a fault occurs in the network, how to quickly locate the network fault is very important. In some cases, the service path restoration technology is usually adopted to locate the root cause of fault. Due to low efficiency of service path restoration, the fault location period is prolonged, and it is possible that the actual route of the service cannot be restored, so that fault location cannot be performed.

In addition, when a fault occurs in the current network service, it is necessary to acquire fault feature information to determine the root cause of fault. In order to acquire the fault feature information, it is also necessary to firstly determine the alarm, configuration and performance information of objects to be acquired, i.e., network elements, tunnels, pseudo-wires, T-MPLS links (TMS for short), topological links (TLs for short), ports, board or the like. One implementation is to find a path by which the service passes through service path restoration so as to determine the objects to be acquired. However, in practical applications, when a fault occurs in the current network service, due to configuration errors and other reasons, the actual route of the service cannot be correctly restored, and thus the fault feature information cannot be accurately acquired. In addition, service path restoration will take a long time, and the fault location period will be prolonged.

### SUMMARY

In view of the above, the embodiments of the present application provide a fault location method, apparatus, a device and a storage medium.

An embodiment of the present application provides a fault location method, including: acquiring a first relationship graph corresponding to a service model, the service model being a model of a current network service, the first relationship graph containing a hierarchical relationship between nodes; instantiating nodes in the service model on the basis of configuration information of the current network service and the first relationship graph to generate a second relationship graph of the current network service; and, performing fault location on the current network service on the basis of the second relationship graph.

An embodiment of the present application provides a fault location device, including: a first relationship graph acquisition module configured to acquire a first relationship graph corresponding to a service model, the service model being a model of a current network service, the first relationship graph containing a hierarchical relationship between nodes; a second relationship graph generation module configured to instantiate nodes in the service model on the basis of configuration information of the current network service and the first relationship graph to generate a second relationship graph of the current network service; and, a fault location module configured to perform fault location on the current network service on the basis of the second relationship graph.

An embodiment of the present application provides an apparatus, including: a memory and one or more processors. The memory is configured to store one or more programs which, when executed by the one or more processors, cause the one or more processors to carry out the method described in the embodiments of the present application.

An embodiment of the present application provides a storage medium having computer programs stored thereon which, when executed by a processor, causes the processor to carry out the method described in the embodiments of the present application.

More descriptions of the above embodiments and other aspects of the present application and the implementations thereof will be provided in the brief description of the drawings, the detailed description of the present invention and the claims.

### BRIEF DESCRIPTION OF DRAWINGS

FIG. 1 is a flowchart of a fault location method according to an embodiment of the present application;
FIG. 2 is a first relationship graph according to an embodiment of the present application;
FIG. 3 is a second relationship graph after instantiation corresponding to an L3VPN service according to an embodiment of the present application;
FIG. 4 is a flowchart of a method for synchronously updating the configuration of the current network service and the second relationship graph according to an embodiment of the present application;
FIG. 5 is a flowchart of another method for synchronously updating the configuration of the current network service and the second relationship graph according to an embodiment of the present application;
FIG. 6 is a flowchart of a fault location method based on the second relationship graph according to the present application;
FIG. 7 is a schematic structural diagram of a fault location device according to an embodiment of the present application; and
FIG. 8 is a schematic structural diagram of an apparatus according to an embodiment of the present application.

### DETAILED DESCRIPTION

In order to make the objectives, technical schemes and advantages of the present application clearer, the embodiments of the present application will be described in detail below in conjunction with the accompanying drawings. It is to be noted that the embodiments in the present application and the features in the embodiments may be arbitrarily combined to derive other embodiments not explicitly described.

It is to be noted that, when a fault occurs in a current network service, it is necessary to acquire fault feature information to determine the root cause of fault. In order to acquire the fault feature information, it is also necessary to firstly determine the alarm, configuration and performance information of objects to be acquired, i.e., network elements, tunnels, pseudo-wires, T-MPLS links (TMS for short), topological links (TLs for short), ports, board or the like. One implementation is to find a path by which the service passes through service path restoration so as to determine the objects to be acquired. However, in practical applications, when a fault occurs in the current network service, due to configuration errors and other reasons, the actual route of the service cannot be correctly restored, and thus the fault feature information cannot be accurately acquired. In addition, service path restoration will take a long time, and the fault location period will be prolonged.

In view of the above, an embodiment of the present application provides a fault location method to solve the above problem.

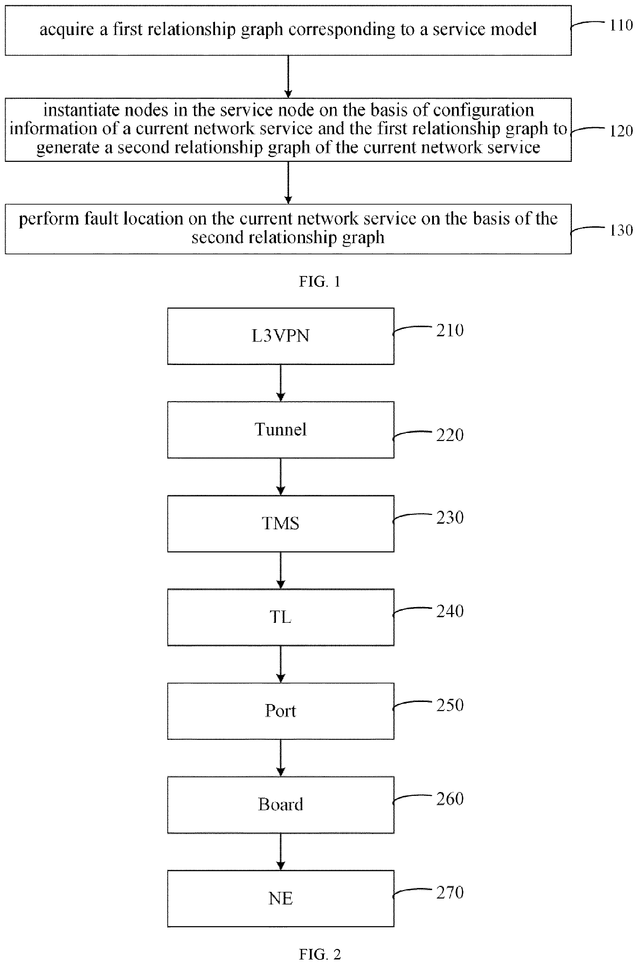

FIG. 1 is a flowchart of a fault location method according to an embodiment of the present application. The method may be executed by a relationship graph generation device which may be composed of software and/or hardware, and may be integrated in a network management system or exist independently of the network management system. As shown in FIG. 1, the method includes steps as follows.

At step 110, a first relationship graph corresponding to a service model is acquired.

It is to be noted that the service model is a hierarchical model abstracted based on nodes contained in a current network service and a hierarchical relationship between the nodes, that is, the service model is a model of the current network service. The type of each entity node, the type of each edge and the first relationship graph between node types are defined according to the service model. In some instances, the first relationship graph includes the hierarchical relationship between nodes.

By taking an L3VPN service model as an example, the type of nodes, the type of edges and the first relationship graph between different node types are defined according to the L3VPN service model by utilizing a knowledge mapping technology. The type of nodes includes: L3VPN, Tunnel, TMS, TL, Port, Board, NE and the like. There is mainly one type of corresponding edges, i.e., edges having a dependency relationship. FIG. 2 is a first relationship graph according to an embodiment of the present application, where the first relationship graph may be a dependency hierarchical graph. As shown in FIG. 2, the hierarchical relationship between different types of nodes is as follows: nodes 210 of the L3VPN type → nodes 220 of the Tunnel type → nodes 230 of the TMS type → nodes 240 of the TL type → nodes 250 of the Port type → nodes 260 of the Board type → nodes 270 of the NE type; and, a dependency relationship presents between different types of nodes.

It is to be noted that different service models correspond to different first relationship graphs, and the type of nodes and edges in the service model and the dependency hierarchical graph corresponding to the service model can be defined in advance according to the service model by means of the knowledge mapping technology.

The service model may be a model corresponding to a transmission service in all networks (e.g., PTN, IPRAN, OTN or other transmission networks) involved in the current network service. The type of the service model will not be limited in the embodiments of the present application. The service model may be an L3VPN service model, an L2VPN service model, an L2+L3VPN service model, a TDM service model, etc.

At step 120, nodes in the service model are instantiated on the basis of configuration information of the current network service and the first relationship graph to generate a second relationship graph of the current network service.

In the embodiments of the present application, there are many ways to acquire the configuration information of the current network service, which will not be limited in the embodiments of the present application. For example, the configuration information of the current network service is acquired by periodically inquiring the network management system. Alternatively, when the configuration information of a service is changed, the changed configuration information is acquired by inquiring the network management system, or the like.

It is to be noted that the nodes are instantiated to establish a dependency relationship between each node and nodes in an upper layer as well as nodes in a lower layer, and establish a correspondence relationship between nodes and node types, or the like.

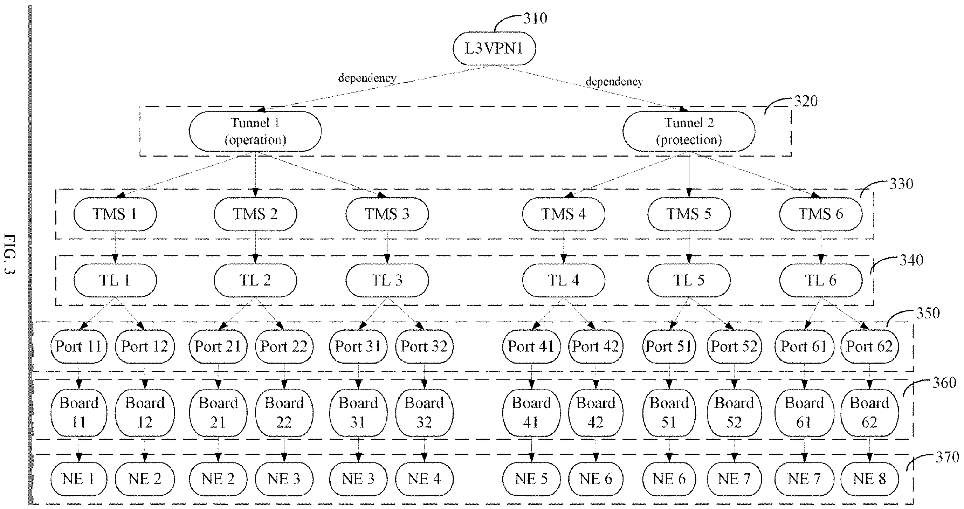

In some instances, the configuration information of the current network service is acquired; and, nodes in the service model are instantiated on the basis of the configuration information, the hierarchical relationship between nodes in the first relationship graph and the type of nodes and edges corresponding to the first relationship graph to generate a second relationship graph of the current network service. In an embodiment, the configuration information of the current network service is read and then a second relationship graph in which each type of nodes are instantiated is generated according to the first relationship graphs corresponding to different service models. FIG. 3 is a second relationship graph after instantiation corresponding to an L3VPN service according to an embodiment of the present application. As shown in FIG. 3, a node 310 of the L3VPN type is in the top layer, and two nodes 320 of the Tunnel type have a dependency relationship with the node 310 of the L3VPN type, one is used for operation and the other one is used for protection. Each node 320 of the Tunnel type has a dependency relationship with three nodes 330 of the TMS type. Each node 330 of the TMS type has a dependency relationship with a node 340 of the TL type. Each node 340 of the TL type has a dependency relationship with two nodes 350 of the Port type. Each node 350 of the Port type has a dependency relationship with a node 360 of the Board type. Each node 360 of the Board type has a dependency relationship with a node 370 of the NE type.

After the second relationship graph is generated, the second relationship graph may be stored in many ways, which will not be limited in the embodiments of the present application. For example, the second relationship graph may be stored in a graph database, a relationship database or a file containing graph data structures. In some instances, a graph database OrientDB may be used to store the second relationship graph.

At step 130, fault location is performed on the current network service on the basis of the second relationship graph.

In some instances, in response to triggering the detection of a fault location event, abnormal nodes in the second relationship graph are determined on the basis of a predefined determination rule; and, fault feature information of the abnormal nodes is acquired on the basis of a fault dependency relationship, and a root cause of fault is determined according to the fault feature information. All abnormal states are found by utilizing the predefined determination rule and the instantiated second relationship graph, thereby reducing the scope of fault location. The fault feature information of each abnormal node is acquired according to the fault dependency relationship, thereby achieving the effect of shortening the fault location period.

It is to be noted that there are many trigger conditions for a fault location event, which will not be limited in the embodiments of the present application. For example, in response to the detection of a fault occurring in the current network service, the fault location event is triggered. A two-way active measurement standard protocol may be configured in the current network service to measure any two devices supporting this standard in the network to determine the presence of a network fault therebetween. Alternatively, in response to the detection of a manually fed-back fault of the current network service, the fault location event is triggered.

In the embodiments of the present application, a determination rule for the abnormal state of various types of nodes is defined in advance on the basis of the first relationship graph. For example, for a certain MPLS-TP tunnel, in case of an alarm of connectivity loss of the tunnel maintenance point or an alarm of crossing a threshold of a far end severely errored second (FESES) of the tunnel maintenance point, it indicates that the MPLS-TP tunnel is in an abnormal state.

In some instances, in response to triggering the detection of the fault location event, the second relationship graph corresponding to the current network service is read from the database that stores the second relationship graph. Based on the instantiated second relationship graph and the determination rule, a predefined search strategy is used to search the second relationship graph to obtain all abnormal nodes.

For the determined abnormal nodes, the fault feature information of each abnormal node is acquired layer by layer from bottom to top according to a hierarchical order in the second relationship graph, and the root cause of fault is determined according to the fault feature information. The reason for troubleshooting from bottom to top is that the fault in an entity node in the bottom layer of the fault dependency relationship will lead to the abnormal state of a depended entity node in an upper layer, which is often the root cause of the fault in the service. Thus, the fault location period can be shortened.

In an implementation, since the second relationship graph already contains the result information of the service path restoration, for example, for an L3VPN service, network elements, tunnels, TMS links, TLs, ports, boards or the like by which the service passes are already contained. Differently, the second relationship graph embodies an independency relationship, which is stored and presented in different ways by utilizing knowledge mapping and graph database technologies. In conclusion, during the fault location process, the second relationship graph can replace the function of the service path restoration. Unlike the service path restoration operation being triggered and executed during fault location, after the configuration of the current network service is completed, the second relationship graph in which each type of nodes are instantiated can be automatically generated on the basis of the configuration information of the current network service and the first relationship graph, and fault location is performed on the current network service on the basis of the second relationship graph. Thus, the time required for service path restoration is saved, and the fault location period is shortened.

In the technical schemes of the embodiment of the present application, by acquiring the predefined first relationship graph corresponding to the service mode, and reading the configuration information of the current network service, nodes in the service model contained in the current network service are instantiated on the basis of the configuration information and the first relationship graph to generate the second relationship graph of the current network service. The function of the service path restoration is replaced with the second relationship graph to avoid the problems of low efficiency and high failure rate caused by the use of service path restoration.

In an implementation, after the second relationship graph of the current network service is generated, the method further includes: in the case of detecting a first updating notification, determining a target service with changed configuration information; acquiring configuration information of the target service; instantiating nodes in the target service model on the basis of the configuration information of the target service and the first relationship graph corresponding to the target service model to generate a second relationship graph of the target service; and, updating the second relationship graph of the current network service on the basis of the second relationship graph of the target service. Thus, the second relationship graph can be updated in time after the configuration of the current network service is changed, thereby avoiding inconsistency with the current network and thus affecting fault location.

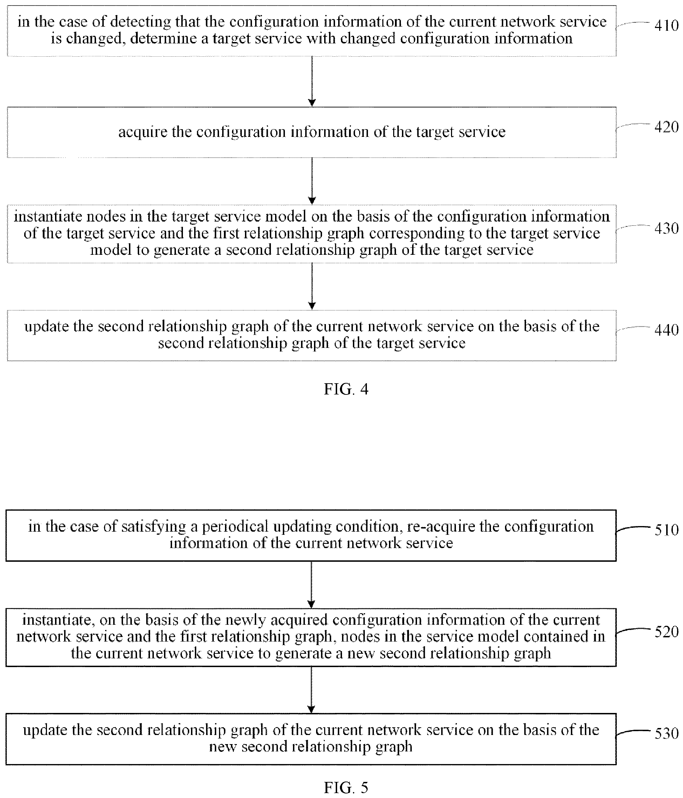

FIG. 4 is a flowchart of a method for synchronously updating the configuration of the current network service and the second relationship graph according to an embodiment of the present application. As shown in FIG. 4, the method includes steps as follows.

At step 410, in the case of detecting that the configuration information of the current network service is changed, a target service with changed configuration information is determined.

The network management system generates a first updating notification after detecting that the configuration information of the current network service is changed. In some instances, a service identifier of the target service with changed service configuration is carried in the first updating notification. The network management system transmits the first updating notification to a second relationship graph updating module. The second relationship graph updating module is configured to update the second relationship graph. In some instances, the second relationship graph updating module may be a functional module integrated in the network management system. Alternatively, the second relationship graph updating module may also be a functional module independent of the network management system, and the network management system configures a communication interface for the second relationship graph updating module for the second relationship graph updating module to call the communication interface to acquire related data in the network management system.

In some instances, upon receiving the first updating notification, the second relationship graph updating module parses the first updating notification to obtain a target service with changed configuration information.

At step 420, the configuration information of the target service is acquired.

For example, the second relationship graph updating module calls the communication interface to read the configuration information of the target service. Since only the configuration information of the service with changed service configuration is read, instead of the configuration information of all services in the current network service, the amount of data to be read is significantly reduced, and the updating efficiency is improved.

At step 430, nodes in the target service model are instantiated on the basis of the configuration information of the target service and the first relationship graph corresponding to the target service model to generate a second relationship graph of the target service.

In some instances, the first relationship graph corresponding to the target service is acquired, the second relationship graph in which each node contained in the target service are instantiated is regenerated on the basis of the configuration information of the target service and the first relationship graph.

At step 440, the second relationship graph of the current network service is updated on the basis of the second relationship graph of the target service.

In some instances, the stored second relationship graph of the target service is acquired, and the newly generated second relationship graph of the target service is compared with the stored second relationship graph. If the newly generated second relationship graph of the target service is the same as the stored second relationship graph, the stored second relationship graph will not be modified. If the newly generated second relationship graph of the target service is different from the stored second relationship graph, the stored second relationship graph is added, deleted or updated on the basis of the newly generated second relationship graph of the target service, thereby ensuring that the two second relationship graphs are the same.

In an implementation, after the second relationship graph of the current network service is generated, the method further includes: in the case of detecting a second updating notification, re-acquiring the configuration information of the current network service; instantiating, on the basis of the newly acquired configuration information of the current network service and the first relationship graph, nodes in the service model contained in the current network service to generate a new second relationship graph; and, updating the second relationship graph of the current network service on the basis of the new second relationship graph. In this implementation, the second relationship graph of the current network service can be updated after the synchronous updating event is triggered, thereby avoiding the situation where the fault location is affected due to ineffective or unsuccessful timely updating mechanism.

FIG. 5 is a flowchart of another method for synchronously updating the configuration of the current network service and the second relationship graph according to an embodiment of the present application. As shown in FIG. 5, the method includes steps as follows.

At step 510, in the case of a periodical updating condition being satisfied, the configuration information of the current network service is re-acquired.

It is to be noted that a periodical updating task is created in the network management system to periodically update the instantiated second relationship graph. When the periodical updating condition is satisfied, a second updating notification is transmitted to the second relationship graph updating module. It is to be noted that, the second updating notification is used to instruct the second relationship graph updating module to read the configuration information of all network services in the current network service and then update the second relationship graph on the basis of the read configuration information. There may be many types of periodical updating conditions, which will not be limited in the embodiments of the present application. For example, the periodical updating condition may be that the synchronous updating operation is executed at a fixed time. For example, the synchronous updating operation is executed at xx:00 to yy:00 on the evening of every Monday, or the synchronous updating operation is executed at xx:00 to yy:00 on the evening of the 1st day of every month, etc. Alternatively, the periodical updating condition may be that the synchronous updating operation is executed in a specific period, for example, every day, every week, every month, etc. Furthermore, the period and time in the periodical updating condition may be set according to actual needs.

In some instances, upon receiving the second updating notification, the second relationship graph updating module re-reads the configuration information of all services in the current network service. It is to be noted that the reading of the configuration information may be completed in one period of time or in multiple periods of time, which will not be limited in the embodiments of the present application.

At step 520, nodes in the service model contained in the current network service are instantiated on the basis of the newly acquired configuration information of the current network service and the first relationship graph to generate a new second relationship graph.

At step 530, the second relationship graph of the current network service is updated on the basis of the new second relationship graph.

In some instances, the stored second relationship graph of the current network service is acquired. The newly generated second relationship graph is compared with the stored second relationship graph. If the newly generated second relationship graph is the same as the stored second relationship graph, the stored second relationship graph will not be modified. If the newly generated second relationship graph is different from the stored second relationship graph, the stored second relationship graph is added, deleted or updated on the basis of the new second relationship graph of the target service, thereby ensuring that the two second relationship graphs are the same.

In an implementation, the step of determining abnormal nodes in the second relationship graph on the basis of the preset determination rule includes: traversing nodes in the second relationship graph on the basis of the predefined determination rule to determine abnormal nodes.

For example, a node in the second relationship graph is searched by a traversal search algorithm, and it is determined whether this node is an abnormal node by the determination rule. By that analogy, all nodes in the second relationship graph are subjected to abnormality determination by the determination rule. In this implementation, no matter whether the current entity node is a normal or abnormal node, searching is performed by utilizing the fault dependency relationship, until all entity nodes are traversed, thereby avoiding missing detection.

In an implementation, the step of determining abnormal nodes in the second relationship graph on the basis of the preset determination rule includes: determining, on the basis of the predefined determination rule, whether the current node in the second relationship graph is an abnormal node; if the current node in the second relationship graph is an abnormal node, searching, on the basis of the determination rule, abnormal nodes in a next layer in which nodes have a dependency relationship with the current node; and, if the current node in the second relationship graph is not an abnormal node, giving up searching abnormal nodes in a next layer in which nodes have a dependency relationship with the current node.

For example, it is determined, on the basis of the predefined determination rule, whether a node in the top layer of the second relationship graph is an abnormal node; and, if the node in the top layer of the second relationship graph is an abnormal node, abnormal nodes in a next layer in which nodes have a dependency relationship with the node in the top layer are searched on the basis of the determination rule. For an abnormal node in the nodes of the next layer, abnormal nodes in a further next layer in which nodes have a dependency relationship with this node in the next layer are continuously searched on the basis of the determination rule, by that analogy, until abnormal nodes in the bottommost layer are searched or all nodes in a certain layer are normal nodes. If it is determined on the basis of the determination rule that the nodes in a certain layer are normal nodes, the search for abnormal nodes in a next layer in which nodes have a dependency relationship with the nodes in this layer is given up. In this implementation, searching is continuously performed on the basis of the fault dependency relationship only when the current entity node is abnormal. If the entity node is a normal node, searching along this path is terminated. By performing determination according to the state of each node during searching and performing searching only along the path with abnormal nodes, the search speed is increased. Accordingly, the time of searching abnormal nodes is reduced.

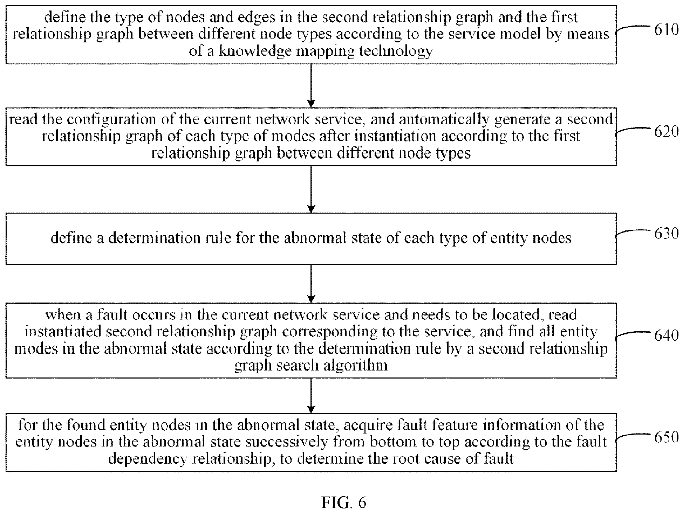

In an implementation, a fault location method based on a second relationship graph is provided. FIG. 6 is a flowchart of a fault location method based on a second relationship graph according to an embodiment of the present application. As shown in FIG. 6, the method includes steps as follows.

At step 610, the type of nodes and edges in a second relationship graph and a first relationship graph between different node types are defined according to a service model by means of a knowledge mapping technology.

For example, for an L3VPN service model, the corresponding node type includes: L3VPN, Tunnel, TMS, TL, Port, Board, NE, etc. There is mainly one type of corresponding edges, i.e., edges in a dependency relationship. The dependency hierarchy of each node type is shown in FIG. 2.

At step 620, the configuration of a current network service is read, and a second relationship graph in which each type of nodes are instantiated is automatically generated according to the first relationship graph between different node types defined at step 610.

The instantiated second relationship graph is stored for use. The second relationship graph may be stored in various ways, including but not limited to the following ways: for example, a graph database, a relationship database, a file containing graph data structures, etc. In this embodiment, it is preferably stored by a graph database OrientDB.

At step 630, a determination rule for the abnormal state is defined for each type of entity nodes defined at step 610.

For example, for a certain MPLS-TP tunnel, in case of an alarm of connectivity loss of a tunnel maintenance point or an alarm of crossing a threshold of a far end severely errored second (FESES) of the tunnel maintenance point, it indicates that the MPLS-TP tunnel is in an abnormal state.

At step 640, when a fault occurs in the current network service and needs to be located, the instantiated second relationship graph corresponding to the service is read, and all entity nodes in the abnormal state are found according to the determination rule for the node state defined at step 630 by a second relationship graph search algorithm.

Two search algorithms may be adopted. The first search algorithm is as follows: no matter whether a current entity node is normal or abnormal, searching is performed on the basis of the fault dependency relationship, until all nodes are traversed. The second search algorithm is as follows: searching is performed continuously on the basis of the fault dependency relationship only when the current entity node is abnormal, and searching along the path is terminated if this node is normal. The former is a traversal search algorithm which is simple. The latter has the following advantage: determination is performed according to the state of each node during searching, and searching is performed only along the path with abnormal nodes, so that the search speed is fast.

At step 650, for the entity nodes in the abnormal state found at step 640, the fault feature information of the entity nodes in the abnormal state is acquired successively from bottom to top according to the fault dependency relationship, in order to determine the root cause of fault.

In the technical schemes of the embodiment of the present application, the fault dependency relationship is fully utilized to find entity nodes in the abnormal state, so that the scope of fault location is reduced. Meanwhile, troubleshooting is performed successively from the nodes in the bottom layer with the highest service fault possibility to determine the root cause of fault, so that the fault location period is shortened.

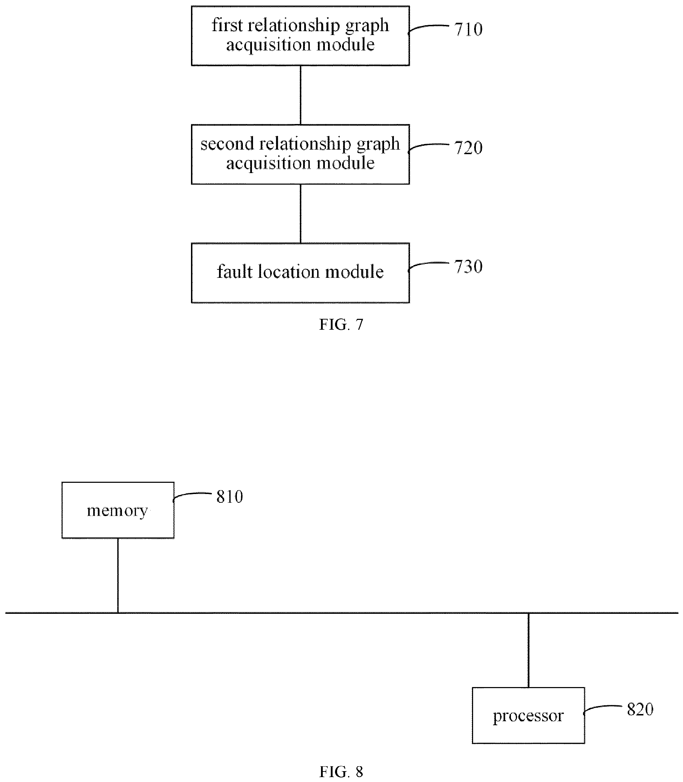

FIG. 7 is a schematic structural diagram of a fault location device according to an embodiment of the present application. This device performs fault location on a current network service by executing the fault location method according to the embodiments of the present application. As shown in FIG. 7, the fault location device in the embodiment of the present application includes modules as follows.

A first relationship graph acquisition module 710 is configured to acquire a first relationship graph corresponding to a service model which is a model of the current network service. The first relationship graph contains a hierarchical relationship between nodes.

A second relationship graph generation module 720 is configured to instantiate nodes in the service model on the basis of configuration information of the current network service and the first relationship graph to generate a second relationship graph of the current network service.

A fault location module 730 is configured to perform fault location on the current network service on the basis of the second relationship graph.

The fault location device provided in the embodiment of the present application is configured to implement the fault location method in the embodiments of the present application. The implementation principle and technical effects of the fault location device are similar to those of the fault location method and will not be repeated here.

In an implementation, the second relationship graph generation module 720 is configured to perform steps as follows.

Configuration information of the current network service is acquired.

Nodes in the service model is instantiated on the basis of the configuration information, the hierarchical relationship between nodes in the first relationship graph and the type of nodes and edges corresponding to the first relationship graph.

In an implementation, the fault location device further includes module as follows.

A second relationship graph updating module is configured to in response to the detection that the configuration information of the current network service is changed, determine a target service with changed configuration information.

Configuration information of the target service is acquired.

On the basis of the configuration information of the target service and a first relationship graph corresponding to a target service model, nodes in the target service model are instantiated to generate a second relationship graph of the target service.

The second relationship graph of the current network service is updated on the basis of the second relationship graph of the target service.

In an implementation, the fault location device further includes a second relationship graph updating module.

The second relationship graph updating module is configured to in response to satisfying a periodical updating condition, re-acquire the configuration information of the current network service.

On the basis of the newly acquired configuration information of the current network service and the first relationship graph, nodes in the service model contained in the current network service are instantiated to generate a new second relationship graph.

The second relationship graph of the current network service is updated on the basis of the new second relationship graph.

In an implementation, the fault location module 730 is configured to perform steps as follows.

In response to triggering the detection of a fault location event, abnormal nodes in the second relationship graph are determined on the basis of a preset determination rule.

Fault feature information of the abnormal nodes is acquired on the basis of a fault dependency relationship, in order to determine a fault cause according to the fault feature information.

In an implementation, the step of determining abnormal nodes in the second relationship graph on the basis of the preset determination rule includes sub-step as follows.

Nodes in the second relationship graph are traversed on the basis of the preset determination rule to determine abnormal nodes.

In an implementation, the step of determining abnormal nodes in the second relationship graph on the basis of the preset determination rule includes sub-steps as follows.

On the basis of the preset determination rule, it is determined whether a current node in the second relationship graph is an abnormal node.

If the current node in the second relationship graph is an abnormal node, on the basis of the determination rule, abnormal nodes are searched in a next layer in which nodes have a dependency relationship with the current node.

If the current node in the second relationship graph is not an abnormal node, searching abnormal nodes in a next layer in which nodes have a dependency relationship with the current node is gave up.

In an implementation, the step of acquiring fault feature information of the abnormal nodes on the basis of the fault dependency relationship includes sub-step as follows.

On the basis of a hierarchical order in the second relationship graph, fault feature information of the abnormal is acquired nodes layer by layer from bottom to top.

An embodiment of the present application provides an apparatus. FIG. 8 is a schematic structural diagram of an apparatus according to an embodiment of the present application. As shown in FIG. 8, the apparatus includes a memory 810 and one or more processors 820. The memory 810 is configured to store one or more programs which, when executed by the one or more processors 820, cause the one or more processors 820 to carry out the method described in any one of the embodiments of the present application.

The apparatus provided above may be configured to execute the method in any one of the above embodiments, and has the corresponding functions and beneficial effects.

An embodiment of the present application further provides a storage medium having executable instructions which, when executed by a computer processor, cause the processor to carry out a fault location method. The method includes steps as follows.

A first relationship graph corresponding to a service model is acquired. The service model is a model of a current network service. The first relationship graph contains a hierarchical relationship between nodes.

Nodes in the service model are instantiated on the basis of configuration information of the current network service and the first relationship graph to generate a second relationship graph of the current network service.

Fault location is performed on the current network service on the basis of the second relationship graph.

The foregoing description merely shows some embodiments of the present application, and is not intended to limit the protection scope of the present application.

Generally, various embodiments of the present application may be implemented in hardware or dedicated circuits, software, logics or any combinations thereof. For example, some aspects may be implemented in hardware, while other aspects may be implemented in firmware or software that can be executed by a controller, a microprocessor or other computing device, although the present application is not limited thereto.

The blocks of any logic flow in the accompanying drawings of the present application may represent program steps, or may represent interconnected logic circuits, modules and functions, or may represent combinations of program steps and logic circuits, modules or functions. The computer programs may be stored on a memory. The memory may be of any type suitable for the local technical environment and may be implemented by any suitable data storage technology, for example, but not limited to, read only memories (ROMs), random access memories (RAMs), optical memory devices and systems (digital versatile disks (DVDs) or CDs), etc. The computer-readable medium may include non-transitory storage mediums. The data processor may be of any type suitable for the local technical environment, for example, but not limited to, general purpose computers, special purpose computers, microprocessors, digital signal processors (DSPs), application specific integrated circuits (ASICs), programmable logic devices (such as FGPAs), and processors based on a multi-core processor architecture.

The detailed description of some embodiments of the present application has been provided above by way of non-limiting examples. However, considering the accompanying drawings and the claims, various modifications and adjustments to the foregoing embodiments are apparent for those having ordinary skills in the art without departing from the scope of the present application. Therefore, the appropriate scope of the present application shall be defined by the claims.

## Claims

1. A fault location method, comprising:
acquiring a first relationship graph corresponding to a service model which is a model of a current network service, the first relationship graph containing a hierarchical relationship between nodes;
instantiating nodes in the service model on the basis of configuration information of the current network service and the first relationship graph to generate a second relationship graph of the current network service; and
performing fault location on the current network service on the basis of the second relationship graph.

2. The method of claim 1, wherein the step of instantiating nodes in the service model on the basis of configuration information of a current network service and the first relationship graph comprises:
acquiring configuration information of the current network service; and
instantiating nodes in the service model on the basis of the configuration information, the hierarchical relationship between nodes in the first relationship graph and the type of nodes and edges corresponding to the first relationship graph.

3. The method of claim 1 or 2, after the step of generating a second relationship graph of the current network service, further comprising:
in response to detecting that the configuration information of the current network service is changed, determining a target service with changed configuration information;
acquiring configuration information of the target service;
instantiating nodes in a target service model on the basis of the configuration information of the target service and a first relationship graph corresponding to the target service model to generate a second relationship graph of the target service; and
updating the second relationship graph of the current network service on the basis of the second relationship graph of the target service.

4. The method of claim 1 or 2, after the step of generating a second relationship graph of the current network service, further comprising:
in response to a satisfaction of periodical updating condition, re-acquiring the configuration information of the current network service;
instantiating, on the basis of the newly acquired configuration information of the current network service and the first relationship graph, nodes in the service model of the current network service to generate a new second relationship graph; and
updating the second relationship graph of the current network service on the basis of the new second relationship graph.

5. The method of claim 1, wherein the step of performing fault location on the current network service on the basis of the second relationship graph comprises:
in response to a detection that a fault location event is triggered, determining abnormal nodes in the second relationship graph on the basis of a predefined determination rule; and
acquiring fault feature information of the abnormal nodes on the basis of a fault dependency relationship, and determining a root cause of fault according to the fault feature information.

6. The method of claim 5, wherein the step of determining abnormal nodes in the second relationship graph on the basis of a predefined determination rule comprises:
traversing nodes in the second relationship graph on the basis of the predefined determination rule to determine abnormal nodes.

7. The method of claim 5, wherein the step of determining abnormal nodes in the second relationship graph on the basis of a predefined determination rule comprises:
determining, on the basis of the predefined determination rule, whether a current node in the second relationship graph is an abnormal node;
if so, searching, on the basis of the determination rule, abnormal nodes in a next layer in which nodes have a dependency relationship with the current node; and
otherwise, giving up searching abnormal nodes in a next layer in which nodes have a dependency relationship with the current node.

8. The method of claim 5, wherein the step of acquiring fault feature information of the abnormal nodes on the basis of a fault dependency relationship comprises:
acquiring, on the basis of a hierarchical order in the second relationship graph, fault feature information of the abnormal nodes layer by layer from the bottom to top.

9. A fault location device, comprising:
a first relationship graph acquisition module configured to acquire a first relationship graph corresponding to a service model which is a model of a current network service, the first relationship graph containing a hierarchical relationship between nodes;
a second relationship graph generation module configured to instantiate nodes in the service model on the basis of configuration information of the current network service and the first relationship graph to generate a second relationship graph of the current network service; and
a fault location module configured to perform fault location on the current network service on the basis of the second relationship graph.

10. An apparatus, comprising: a memory and one or more processors, wherein
the memory is configured to store one or more programs which,
when executed by the one or more processors, cause the one or more processors to perform the method of any one of claims 1 to 8.

11. A storage medium having computer programs stored thereon which, when executed by a processor, cause the processor to perform the method of any one of claims 1 to 8.
